# DEMANDE DE BREVET EUROPEEN

(11) **EP 2 017 063 A2**
(43) Date de publication de la demande: **21.01.2009**
(21) Numéro de dépôt: 08160482.9
(22) Date de dépôt: 16.07.2008
(51) Int. Cl.: B29C 47/08

(54) **Dispositif d'extrusion à moteur couple**

(30) Priorité: 19.07.2007 FR 0705229
(71) Demandeur: SSD Parvex SAS, 21000 Dijon (FR)
(72) Inventeur: Maestre, Jean François, 21000 Dijon (FR); Delor, Olivier, 21640 Vougeot (FR)
(74) Mandataire: Verriest, Philippe

(57) **Abrégé**

Dispositif d'extrusion à moteur couple comprenant une vis d'extrusion sans fin, un carter fixe dans lequel est disposé un moteur couple comprenant un stator (2) et un rotor (3) destiné à l'entraînement de la vis d'extrusion sans fin, un arbre creux (8) présentant un logement, solidaire en rotation du rotor (3), au moins une partie de l'arbre creux (8) prenant appui axialement pendant la rotation contre une partie du carter (14) par l'intermédiaire d'une butée de roulement (15), la vis sans fin d'extrusion (4, 5) mobile comprenant une partie d'extrusion filetée (4) et une extension (5) se prolongeant le long de l'axe de la partie filetée, l'extension (5) de la vis sans fin étant maintenue solidairement en rotation dans au moins une partie du logement de l'arbre creux (8), la vis sans fin (4) d'extrusion étant bloquée en translation selon l'axe de rotation A de la vis par un élément d'appui axial amovible (6), **caractérisé en ce que** la vis sans fin (4) d'extrusion est fixée à l'avant du moteur à l'arbre creux, et au moins une partie de l'élément d'appui axial amovible (6) est reçue dans le logement axial de l'arbre creux (8) et comporte des moyens de fixation (6a) à l'arbre creux (8) rendant solidaires l'élément d'appui axial amovible (6) et l'arbre creux (8).

## Description

L'invention concerne un dispositif d'extrusion à moteur couple.

Il est connu notamment du document EP 1 825 027 de réaliser un dispositif d'extrusion à moteur couple comprenant :
- une vis d'extrusion sans fin,
- un carter fixe dans lequel est disposé un moteur couple comprenant un stator et un rotor destiné à l'entraînement de la vis d'extrusion sans fin,
- un arbre creux présentant un logement, solidaire en rotation du rotor, au moins une partie de l'arbre creux prenant appui axialement pendant la rotation contre une partie du carter par l'intermédiaire d'une butée de roulement,
- la vis sans fin d'extrusion mobile comprenant une partie d'extrusion filetée et une extension se prolongeant le long de l'axe de la partie filetée, l'extension de la vis sans fin étant maintenue solidairement en rotation dans au moins une partie du logement de l'arbre creux, la vis sans fin d'extrusion étant bloquée en translation selon l'axe de rotation de la vis par un élément d'appui axial amovible.

Lors de l'opération d'extrusion, l'effort de poussée axial exercé par la matière à extruder sur la vis sans fin est repris par les pièces du mécanisme d'entraînement, en particulier par une butée et l'arbre creux. La reprise de cet effort implique que les pièces soient dimensionnées en conséquence et réalisées en matériaux résistants.

Le changement de la butée de roulement d'une telle structure ou de la vis sans fin d'extrusion est complexe et nécessite le démontage de la plupart des pièces du moteur.

De plus, comme il comporte de nombreux roulements, le coût d'un tel dispositif d'extrusion est élevé.

Dans le cas ou la vis est extraite par l'arrière du moteur, celle-ci doit avoir une longueur supérieure à celle du moteur ce qui implique qu'un dégagement important soit ménagé derrière le moteur pour les opérations de montage et de démontage de la vis.

Un tel dispositif d'extrusion est également connu du document US 2002/064084 A1, dans lequel la vis d'extrusion sans fin est fixée à l'arrière du moteur, c'est-à-dire du côté opposé à la partie filetée d'extrusion. En outre, ce document décrit un arbre creux constitué d'une pièce tubulaire longue dépassant de l'avant et de l'arrière du moteur et une extension de la vis d'extrusion également longue et dépassant aussi de l'avant et de l'arrière du moteur. L'extension de la vis sans fin coopère en rotation, via des dents et des rainures, avec l'arbre creux entre l'avant et l'arrière du moteur. En outre, L'élément d'appui axial est constitué d'une première plaque vissé sur une deuxième plaque elle-même vissé à l'arbre creux et au rotor.

Un tel dispositif est particulièrement encombrant avec une extension de la vis sans fin et un arbre creux de longueur supérieure à celle du moteur. De plus, ce dispositif est inadapté pour reprendre les efforts de poussée axial à l'avant du moteur.

L'état de la technique peut également être illustré par l'enseignement des documents DE 101 13 644 A1 et US 6 164 811 Ces documents décrivent des dispositifs d'extrusion de structure complexe, comprenant notamment un arbre creux constitué d'une pièce tubulaire longue dépassant de l'avant et de l'arrière d'un moteur déporté, et également un élément d'appui axial fixé à l'arbre creux.

La présente invention vise à résoudre ces inconvénients en proposant un dispositif permettant de limiter l'utilisation de matériaux résistants et de simplifier la constitution du dispositif.

A cet effet, l'invention concerne un dispositif du type précité caractérisé en ce que la vis sans fin d'extrusion et l'arbre creux sont solidarisés en rotation à l'avant du moteur, et au moins une partie de l'élément d'appui axial amovible est reçue dans le logement axial de l'arbre creux et comporte des moyens de fixation à l'arbre creux, à l'avant du moteur, rendant solidaires l'élément d'appui axial amovible et l'arbre creux.

La présence de l'élément d'appui axial amovible solidaire de l'arbre creux dans le logement axial de celui-ci, ainsi que la fixation à l'avant du moteur sur cet arbre creux permettent une reprise des efforts par l'avant du moteur, par un arbre creux de longueur réduite, qui transmet les efforts au carter du dispositif à l'avant de celui-ci. Cet arbre creux de longueur réduite est une pièce en matériau résistant de faible dimension. L'arbre creux ne dépasse pas de l'avant et de l'arrière du moteur, limitant notamment l'encombrement lors de l'extraction de la vis d'extrusion filetée.

Ainsi, l'élément d'appui axial est apte à être introduit par l'arrière du moteur et à être fixé à l'arbre creux pour offrir une surface d'appui à la vis d'extrusion sans fin, où l'élément d'appui axial dépasse de l'avant du moteur pour bloquer en translation la vis d'extrusion sur l'avant du moteur, de sorte que la reprise des efforts de poussée axial exercé par la matière à extruder sur la vis d'extrusion s'effectue principalement à l'avant du moteur

Ces dispositions permettent également de positionner la butée de roulement à l'avant du moteur, ce qui permet son accessibilité et un démontage plus facile de cet élément.

En outre, la fixation par l'avant de la vis permet de diminuer la taille de l'extension de fixation de la vis, et donc de la taille de la vis. Cette diminution de la taille de la vis réduit le dégagement nécessaire pour les opérations de montage et de démontage de la vis, et diminue également la matière à utiliser pour la réalisation d'une vis.

Selon un mode de réalisation de l'invention, l'élément d'appui axial amovible comporte un tube.

Cette disposition permet d'introduire un outil d'extraction à travers le tube.

En outre, l'arbre creux et la vis d'extrusion sans fin sont conçus pour que la vis d'extrusion ne puisse être monté et démonté, autrement dit engagé ou dégagé du carter, que par l'arrière du moteur, facilitant ainsi les opérations de montage ou démontage.

Avantageusement, les moyens de fixation comportent un filetage.

Cette caractéristique permet de fixer ou de démonter rapidement et simplement l'élément d'appui axial amovible.

Selon un mode de réalisation, la butée de roulement est une butée à rotule sous rouleaux.

Cette disposition permet une répartition homogène de l'effort lors de l'opération d'extrusion.

Préférentiellement, la position de la butée de roulement est située dans un plan formé par la zone de contact entre l'extension de la vis sans fin d'extrusion et l'élément d'appui axial amovible.

Cette caractéristique est utile pour positionner la butée de roulement à l'endroit où les contraintes sont les plus élevées.

Selon une caractéristique de l'invention, le dispositif d'extrusion comporte des moyens de blocage en rotation de l'arbre creux relativement à la vis d'extrusion, où lesdits moyens de blocage en rotation comportent au moins une rainure ou une cannelure et un organe faisant saillie de forme complémentaire ou un évidement de forme complémentaire.

Cette caractéristique permet de rendre solidaires la vis d'extrusion sans fin et l'arbre creux.

Avantageusement, la vis sans fin d'extrusion est percée et taraudée au niveau de son extension afin de pouvoir accueillir un outil d'extraction.

Il est ainsi possible d'introduire un outil d'extraction à l'extrémité de l'extension de la vis d'extrusion.

Selon une caractéristique de l'invention, le diamètre de la vis d'extrusion est inférieur au diamètre de l'arbre creux.

Grâce à cette caractéristique, un épaulement est réalisé dans le logement de l'arbre creux.

Selon une possibilité de l'invention, les moyens d'appui traversent le moteur.

Cette caractéristique permet de réduire la longueur de l'extension de la vis sans fin d'extrusion et par conséquent permet de diminuer les coûts de la vis qui est généralement réalisée avec un matériau noble.

De façon alternative, les moyens de fixation comportent un système de baïonnette ou un système de clips ou un système de serrage à expansion.

Avantageusement, des moyens d'étanchéité, notamment un joint torique ou un collage, sont disposés entre le tube et l'arbre creux pour permettre le passage d'un fluide. Dans ce cas, le tube pourra avantageusement dépasser du moteur pour faciliter l'arrivée du fluide et éviter de contaminer le moteur.

De toute façon, l'invention sera bien comprise à l'aide de la description qui suit, en référence aux figures schématiques annexées représentant, à titre d'exemple non limitatif, une forme d'exécution de ce dispositif d'extrusion, où :.
- la Figure 1 est une vue en coupe longitudinale du dispositif d'extrusion selon l'invention ;
- la Figure 2 est une vue en coupe longitudinale du dispositif d'extrusion lorsque la tige filetée est introduite ;
- la Figure 3 est une vue en coupe longitudinale du dispositif d'extrusion lorsque le tube a été retiré et l'organe de traction a été disposé ; et
- la Figure 4 est une vue en coupe longitudinale du dispositif d'extrusion lorsque la vis d'extrusion sans fin est tractée

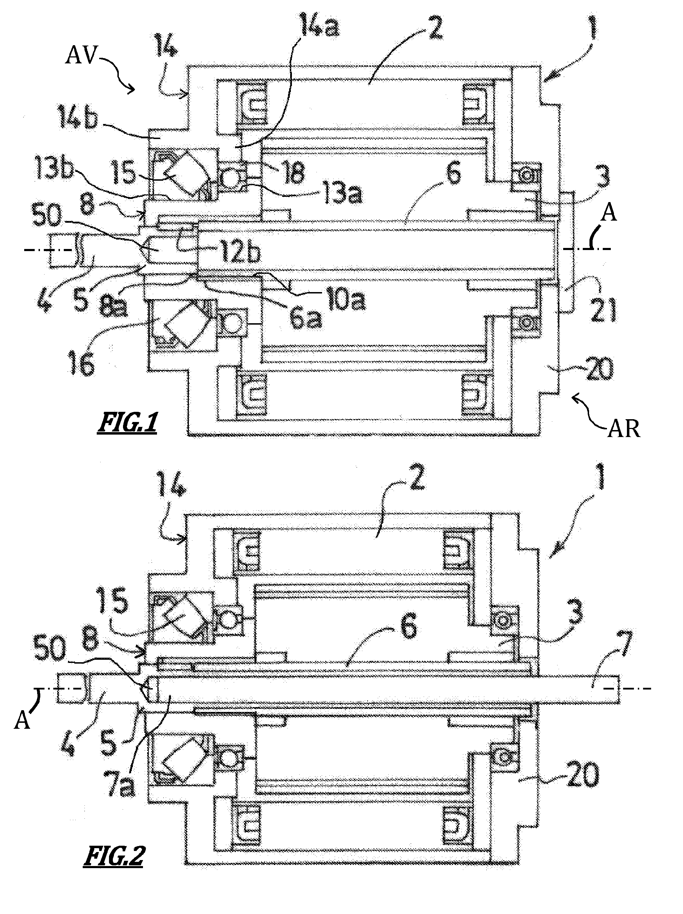

La figure 1 représente un dispositif d'extrusion 1 selon l'invention, comportant un mécanisme d'entraînement utilisé pour commander une vis d'extrusion 4, 5 sans fin possédant un axe de rotation A. Le mécanisme d'entraînement comporte un carter 14 fixe dans lequel est disposé un moteur couple avec un stator 2 et un rotor 3. Le stator 2 de forme cylindrique entoure le rotor 3 de forme cylindrique. Le stator et le rotor sont centrés sur l'axe de rotation A de la vis d'extrusion sans fin 4, 5. Le dispositif d'extrusion 1, le carter 14, et les éléments du moteur 2, 3 comprennent respectivement une partie AV et une partie AR le long de l'axe de rotation A ; la partie avant AV étant située du côté où la vis d'extrusion 4, 5 saillent hors du carter 14 pour effectuer l'opération d'extrusion, et la partie arrière AR étant située du côté opposé à ladite vis d'extrusion 4, 5.

Le dispositif d'extrusion 1 comporte une vis d'extrusion 4, 5 sans fin qui comprend une partie filetée 4 d'extrusion qui dépassent de l'avant AV du carter 14, et une extension 5 se prolongeant le long de l'axe de la partie filetée 4 et destinée à s'étendre au moins partiellement dans le carter 14 pour coopérer en rotation avec le moteur 2, 3. Le diamètre de l'extension 5 est plus grand ou égal que le diamètre de la partie filetée 4 de la vis d'extrusion. L'extension 5 de la vis d'extrusion présente à son extrémité libre un perçage et un taraudage formant un orifice taraudé 50, ledit orifice taraudé 50 étant destinés à recevoir par vissage l'extrémité filetée 7a d'un outil d'extraction 7 qui sera décrit ultérieurement.

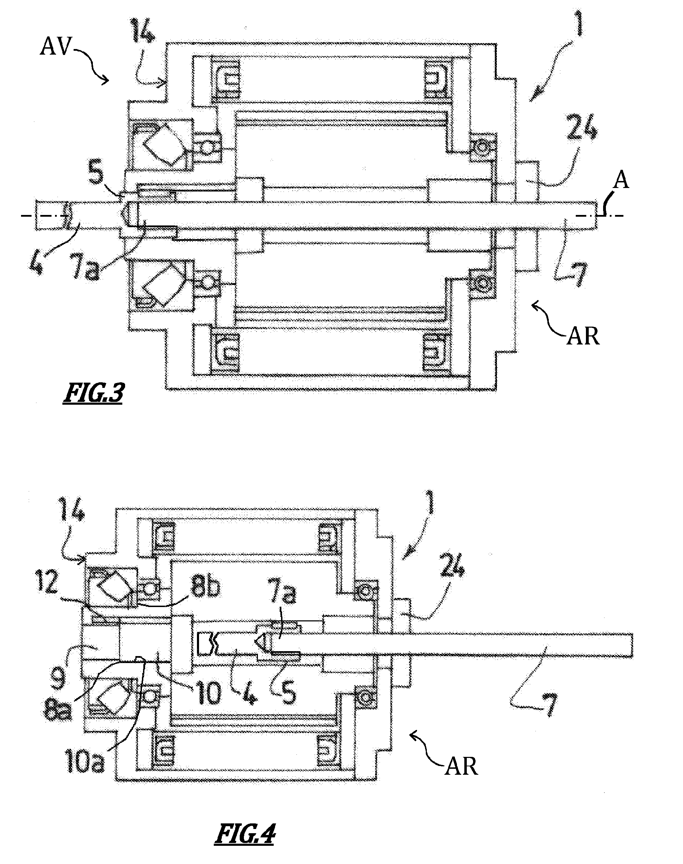

Le dispositif d'extrusion 1 comporte également un arbre creux 8 coaxial au rotor 3 et solidaire en rotation de celui-ci. L'arbre creux 8 présente un logement axial traversant ledit arbre creux 8 de part en part, et qui comporte deux portions différentes 9, 10 visibles en figure 4. La première portion 9 est située à l'avant du moteur tandis que la seconde portion 10 est recouverte en partie par le moteur. Le diamètre de la première portion 9 est inférieur au diamètre de la seconde portion 10 afin que ledit arbre creux 8 présente un épaulement interne 8a entre les deux dites portions 9, 10 du logement axial.

La première portion 9 du logement axial de l'arbre creux 8 est destinée à recevoir l'extension 5 de la vis d'extrusion et le dispositif d'extrusion comporte des moyens de blocage en rotation 12a, 12b de ladite extension 5 relativement audit arbre creux 8.

Les moyens de blocage en rotation comprennent d'une part une rainure 12a (visible en figure 4) ménagée dans la première portion 9 du logement axial de l'arbre creux 8, et d'autre part un organe faisant saillie 12b de l'extension 5 de la vis d'extrusion, où ledit organe faisant saillie 12b est de forme complémentaire à la rainure 12a afin de s'engager dans cette dernière et bloquer en rotation ladite extension 5 dans ledit arbre creux 8. Les moyens de blocage en rotation 12a, 12b sont ainsi destinés à rendre solidaires en rotation la vis d'extrusion 4, 5 et l'arbre creux 8. Le blocage de la vis d'extrusion 4, 5 est située à l'avant du mécanisme d'entraînement et de son carter 14.

L'organe faisant saillie 12b peut être rapporté sur l'extension 5 de la vis d'extrusion ou bien venir de matière avec cette dernière. Selon un autre mode de réalisation de l'invention, les moyens de blocage en rotation 12 comprennent au moins une cannelure sur l'extension 5 de la vis d'extrusion et au moins un évidemment de forme complémentaire à la cannelure dans le logement de l'arbre creux 8.

La seconde portion 10 est destinée à recevoir un élément d'appui axial 6 amovible destiné à bloquer la vis d'extrusion 4, 5 en translation. Le dispositif d'extrusion comporte des moyens de blocage de l'élément d'appui axial amovible 6 à l'intérieur de l'arbre creux 8, lesdits moyens de blocage étant destinés à solidariser, de façon amovible, ledit élément d'appui axial 6 et ledit arbre creux 8.

Les moyens de blocage en rotation comprennent d'un part un filetage 6a réalisé sur la surface extérieure de l'extrémité de l'élément d'appui axial 6 introduite dans l'arbre creux 8, et d'autre part un taraudage 10a réalisée sur la surface interne de la seconde portion 10 du logement axial de l'arbre creux 8 au voisinage de l'épaulement 8a.

Ainsi, l'élément d'appui axial 6 amovible est d'abord introduit par l'arrière AR du carter 14 et du moteur dans la seconde portion 10 filetée du logement axial de l'arbre creux 8, et ensuite vissé dans ladite seconde portion 10 jusqu'à venir en appui contre l'épaulement 8a. La fixation de l'élément d'appui axial 6 amovible dans l'arbre creux 8 est donc réalisée par vissage. L'élément d'appui axial 6 amovible représenté sur les figures 1 et 2 est réalisé sous la forme d'un tube centré autour de l'axe de rotation A et dépassant à la fois à l'avant et à l'arrière du moteur 2, 3.

En présence de l'élément d'appui axial 6 amovible, la vis d'extrusion 4, 5 est introduite par l'avant AV du carter 14 et du moteur 2, 3 dans la première portion 9 du logement axial de l'arbre creux 8, jusqu'à venir prendre appui contre l'élément d'appui axial 6 qui est vissé dans la seconde portion 10 du logement axial présentée par l'arbre creux 8.

En absence de l'élément d'appui axial 6 amovible, la vis d'extrusion 4, 5 peut être insérée dans le logement précité par l'avant AV ou par l'arrière AR du carter 14 et du moteur 2, 3.

L'arbre creux 8 présente sur sa surface externe une partie arrière 13a qui entoure partiellement la seconde portion 10 du logement axial de l'arbre creux 8, et une partie avant 13b qui entoure au moins en partie la première portion 9 du logement axial de l'arbre creux 8 ainsi qu'une partie de ladite la seconde portion 10. Les parties arrière 13a et avant 13b sont séparées par un épaulement externe 8b prévu sur la surface externe de l'arbre creux 8, où ledit épaulement externe 8 entoure la seconde portion 10. La partie arrière 13a présente un diamètre supérieur au diamètre de la partie avant 13b.

Selon un mode de réalisation particulier et non limitatif, des roulements à billes 18 sont disposés entre la partie arrière 13a de l'arbre creux 8 et un premier palier 14a du carter 14 fixe. Les roulements 18 sont destinés à permettre la libre rotation de l'arbre creux 8 realtivement au carter 14, et par conséquent la libre rotation de la vis d'extrusion 4, 5 par rapport au carter 14 fixe.

Au moins une butée de roulement 15 est disposée entre la partie avant 13b de l'arbre creux 8 et un deuxième palier 14b du carter 14. La butée de roulement 15 comprend une butée à rotule sous rouleaux. La position de la butée de roulement 15 est située dans un plan formé par la zone de contact entre l'extension 5 de la vis d'extrusion et l'élément d'appui axial 6 amovible, correspondant au plan normal à l'axe de rotation et passant par l'épaulement interne 8a de l'arbre creux 8 . La butée de roulement 15 vient en butée contre l'épaulement externe 8b de l'arbre creux 8, de sorte que cette butée de roulement 15 entoure en partie les première 9 et seconde 10 portions du logement axioal de l'arbre creux 8.

En référence à la figure 1, pendant l'opération d'extrusion, la vis d'extrusion 4, 5 est maintenue bloquée en translation suivant l'axe de rotation A en venant prendre appui contre l'élément d'appui axial 6 amovible. La position de la butée de roulement 15 autour de la zone de contact permet une répartition homogène de l'effort pendant une opération d'extrusion.

Une plaque de maintien 20 est positionnée à l'arrière AR du carter 14 et du moteur de façon perpendiculaire à l'axe de rotation A et fixée au carter 14. Un bouchon 21 amovible est fixé à la plaque de maintien 20 à l'aide de vis et d'écrou. Le bouchon 21 est destiné à fermer l'arrière AR du carter 14.

Le démontage et le montage de la vis d'extrusion 4, 5 peuvent être opérés par l'arrière AR du carter 14 et du moteur 2, 3. A cet effet, le bouchon 21 situé sur la plaque de maintien 20 à l'arrière du moteur est démonté.

Dans un premier temps, et comme cela est représenté en figure 2, un outil d'extraction 7 de la vis sans fin 4, 5 est employé, où ledit outil d'extraction 7 se présente sous la forme d'une tige dont une extrémité 7a présente un filetage externe. Cet outil d'extraction 7 est introduit par son extrémité 7a filetée dans le l'élément d'appui axial 6 de forme tubulaire. L'outil d'extraction 7 est fixé à l'extension 5 de la vis d'extrusion par vissage, ladite extrémité 7a filetée coopérant avec l'orifice taraudé 50.

Dans un deuxième temps, le tube 6 servant d'élément d'appui axial amovible est dévissé de la seconde portion 10 du logement axial de l'arbre creux 8, puis tracté ou tiré hors dudit logement axial de l'arbre creux 8 et hors du carter 14 du dispositif 1, afin d'arriver dans la configuration illustré en figure 3.

Dans un troisième temps, une traction est réalisée sur l'outil d'extraction 7 pour tirer ce dernier en direction de l'arrière AR du dispositif 1. La traction est réalisée en utilisant un organe taraudé 24 qui se visse sur la tige 7, qui présente plus particulièrement un filetage sur toute sa longueur, et qui prend appui sur la plaque de maintien 20. En entraînant l'organe taraudé 24 en rotation lorsqu'il est en contact avec la plaque de maintien 20, la tige 7 est entraînée en translation vers l'arrière du AR du dispositif 1. Cette opération nécessite un dégagement à l'arrière du moteur plus faible que dans les dispositifs d'extrusion classique.

Selon une variante de réalisation, la fixation de l'élément d'appui axial 6 amovible dans l'arbre creux 8 se fait par un système à baïonnette. L'extrémité de l'élément d'appui axial 6comporte alors un organe faisant saillie. Lors de l'introduction de l'élément d'appui axial 6jusqu'en butée contre l'épaulement interne 8a de l'arbre creux 8, l'organe faisant saillie est introduit dans un logement complémentaire ménagé dans la seconde portion 10 du logement axial de l'arbre creux 8. L'organe faisant saillie peut également être situé dans le logement de l'arbre creux 8, et dans ce cas l'élément d'appui axial 6 comprend un logement de forme complémentaire à l'organe faisant saillie.

Selon une variante de réalisation, la fixation de l'élément d'appui axial 6 amovible dans l'arbre creux 8 est réalisée au moyen d'une bague expansible.

Selon une variante de réalisation, la fixation de l'élément d'appui axial 6 amovible réalisée au moyen d'un clips ou d'un circlips.

Selon une variante de réalisation, les moyens de blocage en rotation de l'extension 5 dans l'arbre creux 8 présentent une forme spécifique du logement, telle qu'une forme carré ou une forme triangle ou une forme spline.

## Revendications

1. Dispositif d'extrusion à moteur couple comprenant :
- une vis d'extrusion sans fin (4, 5),
- un carter (14) fixe dans lequel est disposé un moteur couple comprenant un stator (2) et un rotor (3) destiné à l'entraînement de la vis d'extrusion sans fin (4, 5),
- un arbre creux (8) présentant un logement axial (9, 10), solidaire en rotation du rotor (3), avec au moins une partie de l'arbre creux (8) prenant appui axialement pendant la rotation contre une partie du carter (14) par l'intermédiaire d'une butée de roulement (15),
la vis sans fin d'extrusion (4, 5) mobile comprenant une partie d'extrusion filetée (4) et une extension (5) se prolongeant le long de l'axe de la partie filetée (4), l'extension (5) de la vis d'extrusion sans fin étant maintenue solidairement en rotation dans au moins une portion (9) du logement axial de l'arbre creux (8), la vis sans fin d'extrusion (4, 5) étant bloquée en translation selon l'axe de rotation (A) de la vis d'extrusion sans fin (4, 5) par un élément d'appui axial (6) amovible,
**caractérisé en ce que** la vis sans fin d'extrusion (4, 5) et l'arbre creux (8) sont solidarisés en rotation à l'avant du moteur (2, 3), et au moins une partie de l'élément d'appui axial (6) est reçue dans le logement axial (9, 10) de l'arbre creux (8) et comporte des moyens de fixation (6a) à l'arbre creux (8), à l'avant du moteur (2, 3), rendant solidaires l'élément d'appui axial (6) et l'arbre creux (8).

2. Dispositif d'extrusion (1) selon la revendication 1, **caractérisé en ce que** l'élément d'appui axial amovible (6) comporte un tube.

3. Dispositif d'extrusion (1) selon l'une des revendications 1 ou 2, **caractérisé en ce que** les moyens de fixation (6a) comportent un filetage.

4. Dispositif d'extrusion (1) selon l'une des revendications 1 à 3, **caractérisé en ce que** la butée de roulement comprend au moins une butée à rotule sous rouleaux (15).

5. Dispositif d'extrusion (1) selon l'une des revendications 1 à 4, **caractérisé en ce que** la position de la butée de roulement (15) est située dans un plan formé par la zone de contact entre l'extension (5) de la vis d'extrusion (4, 5) et l'élément d'appui axial (6).

6. Dispositif d'extrusion (1) selon l'une des revendications précédentes, **caractérisé en ce qu'**il comprend des moyens de blocage en rotation (12a 12b) de l'arbre creux (8) relativement à la vis d'extrusion (4, 5), où lesdits moyens de blocage en rotation (12a 12b) comportent au moins une rainure (12a) ou une cannelure et un organe faisant saillie de forme complémentaire (12b) ou un évidement de forme complémentaire.

7. Dispositif d'extrusion (1) selon l'une des revendications précédentes, **caractérisé en ce que** la vis d'extrusion (4, 5) est percée et taraudée au niveau de son extension (5) afin de pouvoir accueillir un outil d'extraction (7).

8. Dispositif d'extrusion (1) selon l'une des revendications précédentes, **caractérisé en ce que** le diamètre de la vis d'extrusion (4, 5) est inférieur ou égal au diamètre de l'arbre creux (8).

9. Dispositif d'extrusion (1) selon l'une des revendications précédentes **caractérisé en ce que** les moyens d'appui (6) traversent le moteur.

10. Dispositif d'extrusion (1) selon les revendications 1 ou 2 **caractérisé en ce que** les moyens de fixation (6a) comportent un système de baïonnette ou un système de clips ou un système de serrage à expansion.

11. Dispositif d'extrusion (1) selon l'une des revendications précédentes, **caractérisé en ce que** des moyens d'étanchéité, notamment un joint torique ou un collage, sont disposés entre le tube (6) et l'arbre creux (8) pour permettre le passage d'un fluide.
